**Europäisches Patentamt**

**European Patent Office**

**Office européen des brevets**

(11) Veröffentlichungsnummer: **0 239 757**
**B1**

(19)

(12) **EUROPÄISCHE PATENTSCHRIFT**

(45) Veröffentlichungstag der Patentschrift:
**31.05.89**

(51) Int. Cl.⁴: **F16C 11/06**

(21) Anmeldenummer: **87101891.7**

(22) Anmeldetag: **11.02.87**

(54) **Kugelgelenk.**

(30) Priorität: **05.03.86 DE 3607149**

(43) Veröffentlichungstag der Anmeldung:
**07.10.87 Patentblatt 87/41**

(45) Bekanntmachung des Hinweises auf die Patenterteilung:
**31.05.89 Patentblatt 89/22**

(84) Benannte Vertragsstaaten:
**AT DE FR SE**

(56) Entgegenhaltungen:
**DE-C- 659 600**
**FR-A- 2 568 958**
**GB-A- 2 092 663**
**US-A- 2 010 367**
**US-A- 2 856 250**

(73) Patentinhaber: **ROBERT BOSCH GMBH, Postfach 50,
D-7000 Stuttgart 1(DE)**

(72) Erfinder: **Kehl, Georg, Taläckerstrasse 61,
D-7000 Stuttgart 40(DE)**
Erfinder: **Schäfer, Ernst-Dieter, von-Bülow-Strasse 16,
D-7401 Pliezhausen 4(DE)**

## Beschreibung

Stand der Technik

Die Erfindung geht aus von einem Kugelgelenk nach der Gattung des Hauptanspruchs. Durch die DE-PS 659 600 ist ein Kugelgelenk bekannt, dessen radial elastischer Sicherungsring in eine im äußeren Bauteil befindliche Umfangsnut eintaucht, wobei die Umfangsnut eine ringartig geschlossene Abstützfläche für den Sicherungsring bildet in dem Fall, daß an der Stange, an die der Kugelkopf angeformt ist, Zugkräfte wirken. Von der Stange aus in Richtung zur Mitte des Kugelkopfes gesehen ist die Umfangsnut zunehmend tiefer ausgebildet. Bei der Montage wird zuerst der Sicherungsring in die Umfangsnut eingebracht. Er nimmt nach dem danach erfolgenden Einstecken des zu sichernden Kugelkopfes um so zuverlässiger seine Sicherungsstellung ein, je kleiner sein innerer Durchmesser ist. Ein hierfür vorteilhafter Durchmesser hat aber den Nachteil, daß beim Einstecken des Kugelkopfes der Sicherungsring möglicherweise nicht störungsfrei in die Umfangsnut eintaucht und deshalb beschädigt oder gar in die Kugelpfanne geschoben wird und dadurch die ihm zugeordnete Aufgabe nicht erfüllt.

Vorteile der Erfindung

Das erfindungsgemäße Kugelgelenk mit den kennzeichnenden Merkmalen des Hauptanspruchs hat den Vorteil einer leichten und sicheren Montage des Kugelgelenkes, auch bei automatischer Fertigung, da beim Einstecken des Zentrier- und Aufweitwerkzeugs der Sicherungsring relativ zur Umfangsnut zentriert und dann unbeschädigt in die Umfangsnut gedrängt wird.

Durch die in den Unteransprüchen aufgeführten Maßnahmen sind vorteilhafte Weiterbildungen und Verbesserungen des im Hauptanspruch angegebenen Kugelgelenks möglich. Die kennzeichnenden Merkmale des Anspruchs 2 haben den Vorteil, daß der Sicherungsring beim Hersteller des Kugelgelenks in das äußere Bauteil vormontiert werden kann, und daß der Kugelkopf beim Kunden in bequemer Weise z.B. mittels eines Montageroboters eingeführt werden kann. Hierbei wird vermieden, daß der Sicherungsring auf dem Weg zum Kunden verloren geht. Die kennzeichnenden Merkmale des Anspruchs 3 haben den Vorteil einer raumsparenden Bauweise. Die kennzeichnenden Merkmale des Anspruchs 4 stellen sicher, daß beim Verschieben des Zentrier- und Aufweitwerkzeugs mittels des Kugelkopfes der Sicherungsring tief genug in der Umfangsnut verbleibt. Dies verhindert ein Verkanten des Sicherungsringes mit der Folge einer Beschädigung.

Zeichnung

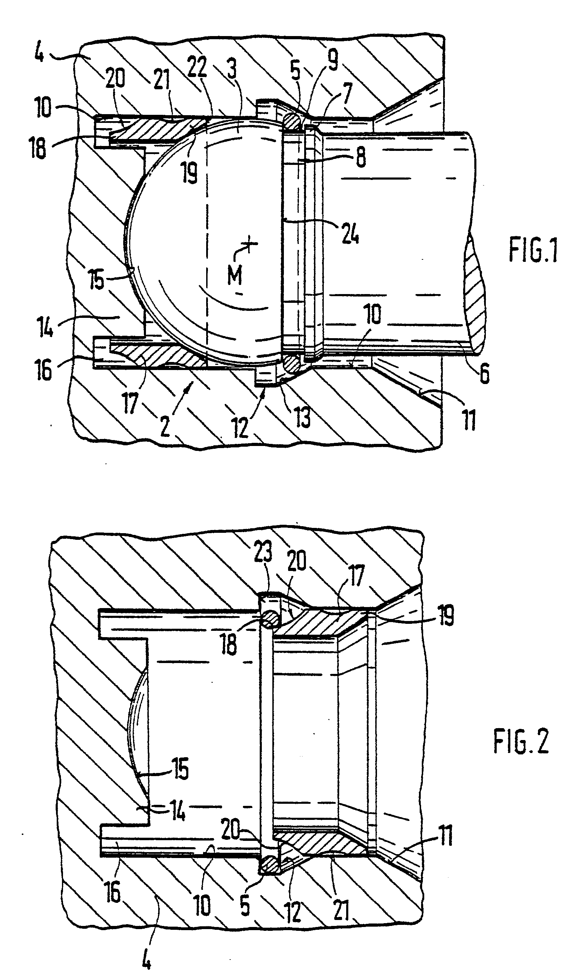

Ein Ausführungsbeispiel des erfindunsgemäßen Kugelgelenks ist in der Zeichnung dargestellt und in der nachfolgenden Beschreibung näher erläutert. Es zeigen Figur 1 das erfindungsgemäße Kugelgelenk im zusammengebauten Zustand im Längsschnitt und die Figuren 2 bis 4 das Kugelgelenk gemäß der Figur 1 in teilweise montierten Zuständen.

Beschreibung des Ausführungsbeispiels

Das Kugelgelenk 2 hat einen Kugelkopf 3, ein äußeres Bauteil 4 und einen Sicherungsring 5.

Der Kugelkopf 3 ist beispielsweise einstückig mit einer Stange 6 verbunden. Nahe beim Kugelkopf 3 trägt die Stange 6 einen Bund 7. Zwischen dem Bund 7 und dem Kugelkopf 3 ist eine Umfangsnut 8 angeordnet. Die Umfangsnut 8 ist so breit ausgebildet, daß der Sicherungsring 5 in sie eintauchbar ist und am Grund 9 der Umfangsnut 8 anliegen kann.

Das äußere Bauteil 4 hat eine zylindrische Bohrung 10, deren Durchmesser so grob ist, daß sie den Kugelkopf 3 schwenkbar aufnehmen kann. Ein trichterartig ausgebildeter Bohrungsabschnitt 11 ist der zylindrischen Bohrung 10 vorgeordnet und dient zum leichten Einführen des Kugelkopfes 3 in die zylindrische Bohrung 10. Neben der Mitte M des Kugelkopfes 3 befindet sich im äußeren Bauteil 4 eine Umfangsnut 12, die sich in axialer Richtung bis zu dem Bund 7 erstreckt. Im Bereich der Umfangsnut 8, die dem Kugelkopf 3 zugeordnet ist, hat die Umfangsnut 12 einen Nutgrund 13, der in Form eines Hohlkegelabschnitts ausgebildet ist, wobei sich der Hohlkegel von der Stange 6 aus gesehen in Richtung der Mitte M des Kugelkopfes 3 öffnet. Der Nutgrund 13 bildet eine ringförmige Abstützfläche für den Sicherungsring 5 für den Fall, daß an der Stange 6 gezogen wird. Die Umfangsnut 12 ist so tief und weit ausgebildet, daß der Querschnitt eines Drahtes, aus dem der Sicherungsring 5 gebogen ist, vollständig in der Umfangsnut 12 Platz findet. Zusätzlich zur zylindrischen Bohrung 10 ist ein koaxial ausgerichteter Zapfen 14 vorgesehen, der eine konkav gewölbte Gelenkfläche 15 aufweist, die gegen den Kugelkopf 3 gerichtet ist zur Aufnahme von Druckkräften.

Zwischen dem Zapfen 14 und der zylindrischen Bohrung 10 verbleibt ein Ringraum 16. Zum Kugelgelenk 2 gehört als zusätzliches Bauteil ein Montagehilfswerkzeug 17. Dieses ist im wesentlichen rohrförmig ausgebildet und an seinem in den Ringraum 16 eintauchenden Anfang 18 als ein Zentrierwerkzeug ausgebildet. Am Anfang 18 hat das Montagehilfswerkzeug 17 einen Durchmesser, der zunächst kleiner ist als der Innendurchmesser des Sicherungsrings 5 und in Richtung zum Ende 19 des Montagehilfswerkzeugs 17 bis auf einen größten Durchmesser anwächst. Dieser größte Durchmesser ist vorteilhafterweise so groß wie der Durchmesser des Kugelkopfes 3. Vom Anfang 18 ausgehend kann beispielsweise das Montagehilfswerkzeug 17 eine konkav gerundete Kontur 20 aufweisen. Etwa im mittleren Bereich des Montagehilfswerkzeugs 17 ist an seinem Umfang eine umfangsnutartige Rastkerbe 21 angeordnet. Am Ende 19 ist das Montagehilfswerkzeug 17 beispielsweise hohlkegelig ausgebildet oder der Form des Kugelkopfes 3 angepaßt, so daß am Ende 19 eine schmale Ringfläche 22 als Stirnfläche verbleibt.

In den Figuren 2, 3 und 4 sind unterschiedliche Montagestufen des Kugelgelenks 2 dargestellt.

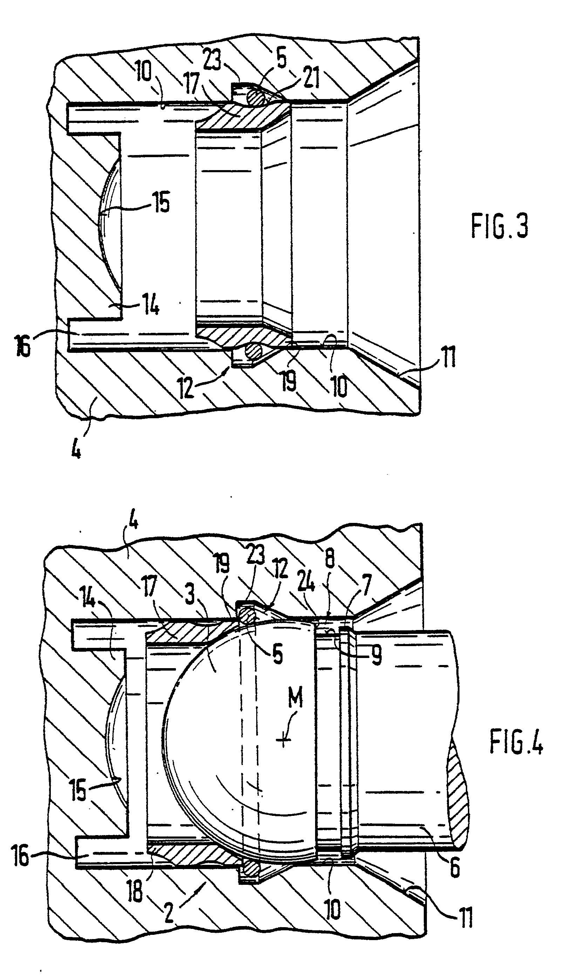

Bei der Montage wird, wie dies in der Figur 2 dargestellt ist, zuerst der Sicherungsring 5 in die Umfangsnut 12 des äußeren Bauteils 4 verbracht. Dann wird das Montagehilfswerkzeug 17 durch den konischen Bohrungsabschnitt 11 hin durch und in die zylindrische Bohrung 10 eingeschoben. Dabei trifft schließlich der Anfang 18 der Kontur 20 den Sicherungsring 5, so wie dies dargestellt ist. Bei weiterem Einschieben des Montagehilfswerkzeugs 17 in Richtung des Ringraums 16 wird mittels der gerundeten Kontur 20, die wie bereits angedeutet als ein Zentrierwerkzeug dient, der Sicherungsring 5 zentrisch zur Umfangsnut 12 ausgerichtet. Bei fortgesetztem Einschieben des Montagehilfswerkzeugs 17 in Richtung des Ringraums 16 wirkt die gerundete Kontur 20 als ein Aufweitwerkzeug. Weil der Sicherungsring 5 von einer Flanke 23 der Umfangsnut 12 in axialer Richtung gestützt wird, weitet sich der Sicherungsring 5 elastisch in radialer Richtung auf und taucht schließlich vollständig in die Umfangsnut 12 ein. Dadurch kann der größte Durchmesser des Montagehilfswerkzeugs 17 die Flanke 23 der Umfangsnut passieren. Anschließend gerät, so wie dies in der Figur 3 dargestellt ist, die Rastkerbe 21 in Ausrichtung zu dem Sicherungsring 5, so daß sich der durch das elastische Aufweiten vorgespannte Sicherungsring 5 stabil in die Rastkerbe 21 legt. Wie bereits der Begriff Rastkerbe 21 andeutet, bildet der gleichzeitig in die Rastkerbe 21 und die Umfangsnut 12 eintauchende Sicherungsring 5 eine Sicherung, die das Montagehilfswerkzeugs 17 in der zylindrischen Bohrung 10 in axialer Richtung nachgiebig fixiert. Dadurch wird ein Herausfallen des Montagehilfswerkzeugs 17 beispielsweise während eines Transports des äußeren Bauteils 4 vom Hersteller zum Kunden vermieden; andererseits aber ist das Montagehilfswerkzeug 17 unter Überwindung der durch die Elastizität des Sicherungsrings 5 bedingten Sicherungskräfte beim endgültigen Montieren des Kugelgelenks 2 weiter verschiebbar in Richtung des Ringraums 16.

Zum vollständigen Zusammenbau des Kugelgelenks 2 wird mittels der Stange 6 der angeformte Kugelkopf 3 durch den trichterähnlichen Bohrungsabschnitt 11 des äußeren Bau teils 4 in die zylindrische Bohrung 10 gesteckt. Dabei taucht schließlich der Kugelkopf 3 in das Ende 19 des Montagehilfswerkzeugs 17 ein und kommt an diesem Ende 19 zur Anlage. Bei weiterem Bewegen des Kugelkopfes 3 in Richtung der Gelenkfläche 15 wird die elastische Sicherungskraft des Sicherungsrings 5 überwunden, und das Montagehilfswerkzeug 17 wandert vor dem Kugelkopf 3 her in Richtung des Ringraums 16. Dabei passiert schließlich das Montagehilfswerkzeug 17 die Umfangsnut 12, so daß der Sicherungsring 5, der infolge der Anordnung der Nutflanke 23 der weiteren Bewegung des Montagehilfswerkzeugs 17 nicht folgen kann, sich gegen den Kugelkopf 3 anlegt. Dieser Montagezustand ist in der Figur 4 dargestellt. Bei weiterem Verschieben des Kugelkopfes 3 zur Gelenkfläche 15 wandert die Mitte M des Kugelkopfes durch den Sicherungsring 5 hindurch. Schließlich gleitet infolge seiner elastischen Vorspannung der Sicherungsring 5 entlang des nunmehr kleiner werdenden Durchmessers des Kugelkopfes 3 zu der Umfangsnut 8 und schnappt in diese ein. Dadurch liegt der Sicherungsring 5 am Nutgrund 9 an. Mit diesem Einschnappen des Sicherungsringes 5 ist das Kugelgelenk 2 vollständig montiert, so wie dies in der Figur 1 dargestellt ist.

Die Abmessungen der Umfangsnuten 8 und 12 und die Ausrichtung des Nutgrundes 13 des äußeren Umfangsnut 12 sind so aufeinander abgestimmt, daß bei Druck auf die Stange 6 zwischen dem Nutgrund 13 und dem Sicherungsring 5 ein Mindestabstand verbleibt, der eine erwünschte Schwenkbeweglichkeit des Kugelkopfes 3 innerhalb des äußeren Bauteils 4 sicherstellt. Wenn während des Schwenkens Druckkräfte an der Stange 6 auftreten, so werden diese meistens überwiegend über den Kugelkopf 3 auf die Gelenkfläche 15 übertragen. Die Gelenkfläche 15 und hilfsweise auch die zylindrische Bohrung 12 bilden eine Kugelpfanne. Wirken dagegen an der Stange 6 Zugkräfte, so zieht die Stange 6 den Kugelkopf 3 mitsamt dem Sicherungsring 5 gegen den Nutgrund 13 der im äußeren Bauteil 4 befindlichen Umfangsnut 12. Wie bereits erwähnt, bildet der Nutgrund 13 eine ringförmige Abstützfläche für den Sicherungsring 5. Infolge der erwähnten hohlkegeligen Gestaltung der Abstützfläche 13 wird mit steigender Zugkraft an der Stange 6 der Sicherungsring 5 fester gegen den Nutgrund 9 gedrückt. Eine ringförmig geschlossene Nutflanke 24, die sich zwischen dem Kugelkopf 3 und dem Nutgrund 9 befindet, bildet einen in axialer Richtung wirksamen Anschlag für den Sicherungsring 5. Infolge der Formgebung der ringartig geschlossenen Abstützfläche 13 wird verhindert, daß der Sicherungsring 5 radial nach außen über diese Nutflanke 24 klettert. Denn dies hätte ein Versagen der Sicherung des Kugelkopfes 3 zur Folge.

Ergänzend wird noch darauf hingewiesen, daß anstelle des rohrartig dargestellten Montagehilfswerkzeugs 17 auch ein nicht dargestelltes topfoder tassenähnlich ausgebildetes Montagehilfswerkzeug verwendbar ist. Dieses wird dann in seinem Innern beispielsweise als eine Kugelpfanne ausgebildet.

Das beschriebene Kugelgelenk ist unter anderem verwendbar zum Anschließen von Bremspedalgestängen an Bremskraftverstärker, Bremsventile und Hauptbremszylinder.

**Patentansprüche**

1. Kugelgelenk mit einem an eine Stange (6) angeformten Kugelkopf (3), mit einem radial elastischen Sicherungsring (5) für den Kugelkopf, mit einem äußeren Bauteil (4), das den Kugelkopf (3) nach Art einer Kugelpfanne gelenkig umfaßt und in einem Abstand von der Mitte des Kugelkopfes (3) in Richtung zu der Stange (6) gelegen eine Umfangsnut (12) aufweist, deren Nutgrund (13) eine ringförmige und zur Mitte des Kugelkopfes hin sich im wesentlichen kegelig öffnende Abstützfläche bildet, an der sich der radial elastische Sicherungsring (5) abstützt, wenn Zug an der Stange (6) des Kugelkopfes wirkt, dadurch gekennzeichnet, daß das Kugelgelenk (2) ein Montagehilfswerkzeug (17) enthält, das nach dem Einführen des Sicherungsringes (5) in die Umfangsnut (12) des äußeren Bauteiles (4) in dieses äußere Bauteil (4) einschiebbar ist und an seinem vorauseilenden Anfang (18) als ein Zentrier-und Aufweitwerkzeug ausgebildet ist zum elastischen Zentrieren und Hineindrücken des Sicherungsrings (5) in die Umfangsnut (12).

2. Kugelgelenk nach Anspruch 1, dadurch gekennzeichnet, daß das Montagehilfswerkzeug (17) an seinem Umfang eine Rastkerbe (21) aufweist, die den Sicherungsring (5) teilweise aufnehmen kann.

3. Kugelgelenk nach Anspruch 1 oder 2, dadurch gekennzeichnet, daß das Montagehilfswerkzeug (17) rohrförmig ausgebil det ist, und daß in der Verlängerung einer den Kugelkopf (3) aufnehmenden zylindrischen Bohrung (10) ein Ringraum (16) angeordnet ist, in den das Montagehilfswerkzeug (17) zumindest teilweise eintauchbar ist.

4. Kugelgelenk nach einem der Ansprüche 1 bis 3, dadurch gekennzeichnet, daß das Montagehilfswerkzeug (17) an seinem zum Kugelkopf (3) gerichteten Ende (19) so ausgebildet ist, daß der Kugelkopf (3) im wesentlichen zu einem Viertel seines Durchmessers in das Werkzeug (17) eintauchbar ist.

## Revendications

1. Articulation à rotule avec une tête (3) de rotule façonnée sur une tige (6), avec une bague de retenue élastique radialement (5) pour la tête de rotule et avec une partie constitutive externe (4) qui enserre la tête de rotule (3) à la façon d'un coussinet sphérique en étant articulée sur elle et qui comporte à une certaine distance du centre de la tête de rotule (3), en direction de la tige (6) une gorge périphérique (12), dont le fond (13) constitue une surface d'appui annulaire et s'ouvrant de façon pratiquement conique en direction du centre de la tête de rotule, surface sur laquelle prend appui la bague de retenue élastique radialement (5) lorsqu'un effort de traction agit sur la tige (6) de la tête de rotule, articulation à rotule caractérisée en ce que cette articulation (2) contient un outil auxiliaire de montage (17) qui, après l'introduction de la bague de retenue (5) dans la gorge périphérique (12) de la partie constitutive externe (4), est susceptible d'être introduit dans cette partie constitutive externe (4), et qui, à son extrémité (18) venant alors en tête, revêt la forme d'un outil de centrage et d'élargissement pour centrer élastiquement et enfoncer à l'intérieur de la gorge périphérique (12) la bague de retenue (5).

2. Articulation à rotule selon la revendication 1, caractérisée en ce que l'outil auxiliaire de montage (17) comporte sur sa périphérie une encoche d'encliquetage (21) qui peut recevoir partiellement la bague de retenue (5).

3. Articulation à rotule selon la revendication 1 ou 2, caractérisée en ce que l'outil auxiliaire de montage (17) est de forme tubulaire et que dans le prolongement d'un alésage cylindrique (10) recevant la tête de rotule (3) est disposé un espace annulaire (16) dans lequel l'outil auxiliaire de montage (17) peut être enfoncé au moins partiellement.

4. Articulation à rotule selon une des revendications 1 à 3, caractérisée en ce que l'outil auxiliaire de montage (17) est façonné de telle sorte à son extrémité (19) dirigée vers la tête de rotule (3) que cette tête de rotule (3) peut en pratique être enfoncée jusqu'au quart de son diamètre dans l'outil (17).

## Claims

1. Ball and socket joint having a ball head (3) formed on a rod (6), having a radially resilient securing ring (5) for the ball head, having an external component (4) which embraces the ball head (3) articulately in ball socket fashion and exhibits at a distance from the centre of the ball head (3), located towards the rod (6), a circumferential groove (12), the groove base (13) of which forms an annular bracing surface which opens substantially conically towards the centre of the ball head, against which the radially resilient securing ring (5) is braced when traction is applied to the rod (6) of the ball head, characterized in that the ball and socket joint (2) comprises an auxiliary assembly tool (17) which is slidable into the external component (4) after the securing ring (5) has been introduced into the circumferential groove (12) of the said external component (4) and is constructed at its leading start (18) as a centring and enlarging tool to resiliently centre and press the securing ring (5) into the circumferential groove (12).

2. Ball and socket joint according to Claim 1, characterized in that the auxiliary assembly tool (17) exhibits at its circumference an engaging notch (21) which can partly receive the securing ring (5).

3. Ball and socket joint according to Claim 1 or 2, characterized in that the auxiliary assembly tool (17) is of tubular construction, and that an annular space (16) into which the auxiliary assembly tool (17) is at least partly immersible is arranged in the prolongation of a cylindrical bore (10) which receives the ball head (3).

4. Ball and socket joint according to one of Claims 1 to 3, characterized in that the auxiliary assembly tool (17) is constructed in such a way at its end (19) which faces the ball head (3) that the ball head (3) is immersible into the tool (17) substantially to one quarter of its diameter.

FIG.1

FIG.2

FIG.3

FIG.4